# EUROPÄISCHE PATENTANMELDUNG

(11) **EP 2 767 667 A1**
(43) Veröffentlichungstag der Anmeldung: **20.08.2014**
(21) Anmeldenummer: 13155743.1
(22) Anmeldetag: 19.02.2013
(51) Int. Cl.: E06B 9/40, E06B 9/58, B60J 7/00

(54) **Rollosystem zum manuellen Auf- und Abwickeln eines Rollos**

(71) Anmelder: Texat Decor-Engineering AG, 8057 Zürich (CH)
(72) Erfinder: Hausammann, Edwin, 8805 Richterswil (CH); Kuhn, Michael, 8600 Dübendorf (CH)
(74) Vertreter: Clerc, Natalia

(57) **Zusammenfassung**

Ein Rollosystem, insbesondere zum Einbau in ein Transportmittel, weist ein Rollo (12) und eine Wickelrolle (1) auf. Das Rollo (12) weist ein freies Ende mit einer Querleiste (11) zum manuellen Verschieben des Rollos (12) auf. An gegenüberliegenden Seiten der Querleiste (11) ist je ein Gleiter (10, 10') vorhanden, mittels welchen die Querleiste (11) geführt verschiebbar ist, wobei durch manuelle Verschiebung der Querleiste (11) das Rollo (12) auf der Wickelrolle (1) aufwickelbar und abwickelbar ist. Es sind zwei Führungsschienen (7,7') vorhanden, wobei je ein Gleiter (10, 10') auf einer der Führungsschienen (7, 7') verschiebbar angeordnet ist. Ein erster und ein zweiter Riemen (9, 9') ist vorhanden, wobei jeder der Riemen (9, 9') je ein erstes und ein zweites Riemenrad (63, 63', 83, 83') umläuft, wobei das erste Riemenrad (63) des ersten Riemens (9) mit dem ersten Riemenrad (63') des zweiten Riemens (9') über eine Verbindungswelle (4, 4', 5) verbunden ist, um die Bewegungen der zwei Riemen (9, 9') miteinander zu synchronisieren. Je ein Gleiter (10, 10') ist mit je einem der Riemen (9, 9') verbunden. Dieses Rollosystem vermeidet ein Verkanten des Rollos beim Verschieben.

## Beschreibung

### TECHNISCHES GEBIET

Die vorliegende Erfindung betrifft ein Rollosystem, beispielsweise zum Einbau in ein Transportmittel, mit einem manuell auf- und abwickelbaren Rollo sowie eine Rolloeinheit zur Verwendung in einem derartigen Rollosystem.

### STAND DER TECHNIK

Eisenbahnwaggons sind üblicherweise an ihren seitlichen Fenstern mit Rollos zum Beschatten des Innenraums ausgestattet. Diese Rollos kann der Fahrgast je nach Bedarf selber von Hand herunterziehen und auch wieder hinaufschieben. Diese Rollos müssen deshalb einfach bedienbar und äusserst robust sein. Sie sollten jedoch trotzdem kostengünstig in der Herstellung sein. Bekannte Rollosysteme für Eisenbahnwaggons weisen üblicherweise eine Schiebeleiste auf, welche in zwei seitlichen Führungsschienen gehalten und entlang diesen nach oben bzw. nach unten verschoben werden kann, um das Rollo zu betätigen.

Rollosysteme sind auch aus anderen Anwendungsbereichen bekannt. So offenbart zum Beispiel DE 100 64 718 C1 ein manuell betätigbares Rollo zum Verschliessen von Fenster-und Dachöffnungen, insbesondere für Fahrzeuge. Dabei wird ein auf einer Wickelrolle aufgewickeltes Rollo mittels einer Schiebeleiste auf- und abgewickelt indem an der Schiebeleiste gestossen oder gezogen wird. Um ein Verkanten der Schiebeleiste zu verhindern, wenn an diesem einseitig gestossen oder gezogen wird, ist die Unterseite der jeweils einen Seite der Schiebeleiste mit der Oberseite der jeweils anderen Seite der Schiebeleiste verbunden. Die Verbindung geschieht mittels Seilzügen und Umlenkrollen. Nachteilig an diesem System ist, dass auf allen Seiten, insbesondere auf der unteren Seite des zu verschliessenden Fensters, Bestandteile des Systems angeordnet sind. Da sich bei Eisenbahnwaggons unterhalb des Fensters oft Heizung- oder Lüftungsschlitze befinden, lässt sich ein derartiges System für diese Waggons nicht verwenden.

Aus der DE 38 15 793 A1 ist ein manuell betätigbarer Rollladen bekannt, wobei der Rollladen mit einem Kurbelantrieb auf- und abgewickelt wird. Um ein Verkanten zu verhindern, sind auf beiden Seiten des Rollladens Riemen mit Umlenkrollen angeordnet. Die Riemenräder der einen Seite sind mit denjenigen der anderen Seite durch Wellen miteinander verbunden. Auch dieses System hat den Nachteil, dass es den Platz rund um das Fenster und besonders auf der unteren Seite beansprucht.

### DARSTELLUNG DER ERFINDUNG

Es ist eine Aufgabe der Erfindung, ein manuell bedienbares Rollosystem, beispielsweise zum Einbau in ein Transportmittel, zur Verfügung zu stellen, das eine verkantungsfreie Führung bei sehr geringem Platzbedarf ermöglicht.

Diese Aufgabe löst ein Rollosystem mit den Merkmalen des Patentanspruchs 1 sowie eine Rolloeinheit mit den Merkmalen des Anspruchs 15.

Das erfindungsgemässe Rollosystem weist ein Rollo und eine Wickelrolle auf. Das Rollo weist ein freies Ende mit einer Querleiste zum manuellen Verschieben des Rollos auf, wobei an gegenüberliegenden Seiten der Querleiste je ein Gleiter vorhanden ist. Mittels dieser Gleiter ist die Querleiste geführt verschiebbar, wobei durch die manuelle Verschiebung der Querleiste das Rollo auf der Wickelrolle aufwickelbar und abwickelbar ist. Zwei Führungsschienen sind auf zwei gegenüberliegenden Stirnseiten des Rollos vorhanden, wobei je ein Gleiter auf einer der Führungsschienen verschiebbar angeordnet ist. Auf der einen Seite des Rollos ist ein erster und auf der gegenüberliegenden Seite des Rollos ist ein zweiter Riemen vorhanden, wobei jeder der Riemen je ein erstes und ein zweites Riemenrad umläuft. Das erste Riemenrad des ersten Riemens ist mit dem ersten Riemenrad des zweiten Riemens über eine Verbindungswelle verbunden, um die Bewegungen der zwei Riemen miteinander zu synchronisieren. Je ein Gleiter ist mit je einem der Riemen verbunden.

Die erfindungsgemässe Rolloeinheit lässt sich mit einem Rollo, einer Wickelrolle und zwei Führungsschienen zum oben genannten Rollosystem ergänzen.

Die Kombination von Riemen, Riemenräder und Verbindungswelle ermöglicht eine schlupffreie Synchronisation der Bewegungen der Querleiste auf der einen Seite mit derjenigen auf der anderen Seite. Dadurch wird ein Verkanten des Rollos beim Hinaufschieben und Herunterziehen verhindert. Das Rollo verläuft stets parallel. Ein Klemmen und eine optisch störende Schiefstellung sind vermieden. Das System ist relativ robust ausgebildet und hält auch unsachgemässer Handhabung stand.

Das erfindungsgemässe Rollosystem eignet sich auch für breite Fenster, für welche die aus dem Stand der Technik bekannten Systeme keine befriedigende Lösung darstellen.

Dadurch, dass die Führungen, die Riemen und Riemenräder nur auf jeweils einer Seite des Rollos angeordnet sind, kann der Platz an der Fensterunterseite anderweitig, wie z.B. für eine Lüftung oder eine Heizung genutzt werden.

Das erfindungsgemässe Rollosystem eignet sich zur Verwendung in einem Fahrzeug, beispielsweise in einem Passagierraum eines Eisenbahnwaggons, einer Strassenbahn oder eines Busses. Es eignet sich für seitliche zur Fahrtrichtung angebrachte Fenster, welcher von Passagieren betätigt werden, jedoch auch für alle anderen Arten von Fenstern, Türen und ähnliches. So lässt es sich beispielsweise auch in der Führerkabine, für Front- oder Rückfenster einsetzen. Weitere Anwendungsbereiche sind ebenfalls möglich, beispielsweise für Fenster in stehenden Objekten, insbesondere für Schrägfenster wie beispielsweise Dachfenster.

Die Riemen können beispielsweise einfache Bänder sein, insbesondere schlupffreie Kunststoffbänder oder Textilbänder sein. Vorzugsweise sind sie jedoch Zahnriemen, insbesondere aus Kunststoff, und die Riemenräder sind Zahnriemenräder. Dies optimiert die Synchronisation der zwei Riemen und garantiert, dass sich die zwei Gleiter stets auf gleicher Höhe befinden. Die Materialwahl ist vorzugsweise so, dass Riemen und Riemenräder selbstschmierend sind.

Die Riemen können beabstandet zu den Führungsschienen angeordnet sein. In einer bevorzugten Ausführungsform umlaufen sie jedoch die Führungsschienen. Dies optimiert den Platzbedarf.

Vorzugsweise ist die Wickelrolle oberhalb der Verbindungswelle angeordnet. Auch dies optimiert den Platzbedarf. Andere Anordnungen sind jedoch ebenfalls möglich.

Die Führungsschienen sind vorzugsweise bandförmig ausgebildet, damit sie möglichst schmal und platzsparend sind und damit die auf ihnen gleitenden Gleiter eine einfache Form aufweisen können.

Die Gleiter sind vorzugsweise im Wesentlichen quaderförmig ausgebildet. Vorzugsweise umschliessen die Gleiter die Führungsschienen teilweise, dies verbessert ihre Lagerung.

In einer bevorzugten Ausführungsform sind die Gleiter federbelastet gegen die Führungsschienen gedrückt. Dadurch ist die Querleiste zwischen den Führungsschienen zentriert.

Die Führungsschienen können gerade oder in ihrer Längsrichtung gebogen ausgebildet sein. Sie lassen sich dadurch der Form des Fensters bzw. der das Fenster umgebenden Wand anpassen. So lässt sich das erfindungsgemässe System auch für gebogene Fenster bzw. Wände einsetzen.

Die Verbindung zwischen Riemen und Gleiter lässt sich auf verschiedene Weise erstellen. Es können geschlossene oder offene Riemen eingesetzt werden. Vorzugsweise werden offene Riemen verwendet, welche bei einem Gleiter zusammengeführt und befestigt werden. Dadurch lassen sich dieselben Riemen für unterschiedliche Fensterhöhen verwenden, d.h. zwei Rollosysteme für Fenster mit gleicher Breite und unterschiedlichen Höhen unterscheiden sich lediglich in den Längen der verwendeten Riemen und der verwendeten Führungsschienen.

In einer einfachen und sicheren Art der Verbindung sind die Enden jeweils eines Riemens bei jeweils einem Gleiter zusammengeführt und befestigt. Sind die Riemen Zahnriemen, so liegt der Zahnriemen vorzugsweise auf seiner ungezahnten Seite an einem entsprechenden Gleitkörper des Gleiters an. Er ist vorzugsweise durch Stifte fixiert, welche auf der gezahnten Seite des Zahnriemens zwischen den Zähnen angeordnet sind, wobei die Stifte in Bohrungen des entsprechenden Gleitkörpers einschiebbar sind.

Vorzugsweise sind die Riemen vorgespannt, damit ein schlupffreies Umlaufen der Riemen und somit eine optimale Synchronisation der Bewegung der zwei Riemen gewährleistet ist. In einer bevorzugten Ausführungsform sind deshalb erste Riemenlagerkörper vorhanden, welche am oberen Ende der Führungsschienen angeordnet sind, wobei in Längsrichtung verschiebbare Spannelemente am ersten Lagerkörper angeordnet sind, wobei Druckfedern die Spannkraft der Spannelemente erzeugen und wobei je ein Riemenrad der zwei Riemen drehbar gelagert an den Spannelementen angeordnet sind.

Alternativ oder zusätzlich ist auch der untere Bereich der Riemen vorgespannt. In einer bevorzugten Ausführungsform sind hierfür zweite Riemenlagerkörper vorhanden, welche am unteren Ende der Führungsschienen angeordnet sind, wobei die zweiten Räder drehbar gelagert an den Riemenlagerkörper angeordnet sind.

Vorzugsweise sind ein Vorspannelement zur Einstellung einer Rückstellkraft der Wickelrolle und eine frontal zugängliche Feststellschraube zur frontalen Einstellung des Vorspannelements vorhanden. Dadurch lässt sich die Vorspannung der Wickelrolle auch bei bereits an oder in der Wand montierter Wickelrolle auf einfache Weise einstellen. So ist gewährleistet, dass das Rollo auch nach längerer Betriebszeit nach wie vor faltenfrei aufgerollt werden kann.

Vorzugsweise verlaufen die Drehachsen der ersten Riemenräder kollinear mit einer Drehachse der Verbindungswelle, welche vorzugsweise geradlinig ausgebildet ist. Auch dies reduziert den Platzbedarf.

Weitere Ausführungsformen sind in den abhängigen Ansprüchen angegeben.

### KURZE BESCHREIBUNG DER ZEICHNUNGEN

Eine bevorzugte Ausführungsform der Erfindung ist im Folgenden anhand der Zeichnungen beschrieben, die lediglich zur Erläuterung dienen und nicht einschränkend auszulegen sind. In den Zeichnungen zeigen:
- Figur 1: eine Frontansicht eines erfindungsgemässen Rollosystems;
- Figur 2: eine perspektivische Darstellung eines ersten oberen Bereichs des Rollosystems gemäss Figur 1 mit einer ersten Rollenlagerung und einer ersten linken Riemenlagereinheit;
- Figur 3: eine perspektivische Darstellung eines zweiten oberen Bereichs des Rollosystems gemäss Figur 1 mit einer zweiten Rollenlagerung und einer ersten rechten Riemenlagereinheit;
- Figur 4: eine perspektivische Darstellung eines dritten, mittleren Bereichs des Rollosystems gemäss Figur 1 mit einem mittleren Bereich einer Verbindungswelle;
- Figur 5: eine perspektivische Darstellung eines unteren Bereichs des Rollosystems gemäss Figur 1 mit einer zweiten linken Riemenlagereinheit;
- Figur 6: eine Ansicht eines Teilbereichs des Rollosystems gemäss Figur 1 in teilweise geschnittener Darstellung mit einem linken Gleiter;
- Figur 7: eine Schnittansicht entlang der Linie A-A der Figur 6 und
- Figur 8: eine Schnittansicht entlang der Linie B-B der Figur 6.

### BESCHREIBUNG BEVORZUGTER AUSFÜHRUNGSFORMEN

Die in diesem Text verwendeten Begriffe "rechts", "links", "oben" und "unten" beziehen sich auf die Darstellung gemäss den Abbildungen. Diese Darstellung entspricht üblicherweise, aber nicht zwingend, dem Blick des Passagiers von der Innenseite des Fahrzeugraums auf das Rollosystem hin. Unter "Längsrichtung" wird eine Auszugsrichtung des Rollos verstanden.

Das Rollosystem weist einen symmetrischen Aufbau bezüglich einer in Längsrichtung verlaufenden Längsmittelachse auf. D.h. die auf der linken Seite der Längsmittelachse angeordneten Elemente weisen einen im Wesentlichen spiegelsymmetrischen Aufbau zu den auf der rechten Seite der Längsmittelachse angeordneten Elementen auf. Die auf der rechten Seite der Längsmittelachse angeordneten Elemente sind mit einem Apostroph (') versehen. Im Folgenden wird jeweils eine Seite des Rollosystems detailliert beschrieben. Die Beschreibung gilt jedoch analog auch für die dazu spiegelsymmetrische andere Seite.

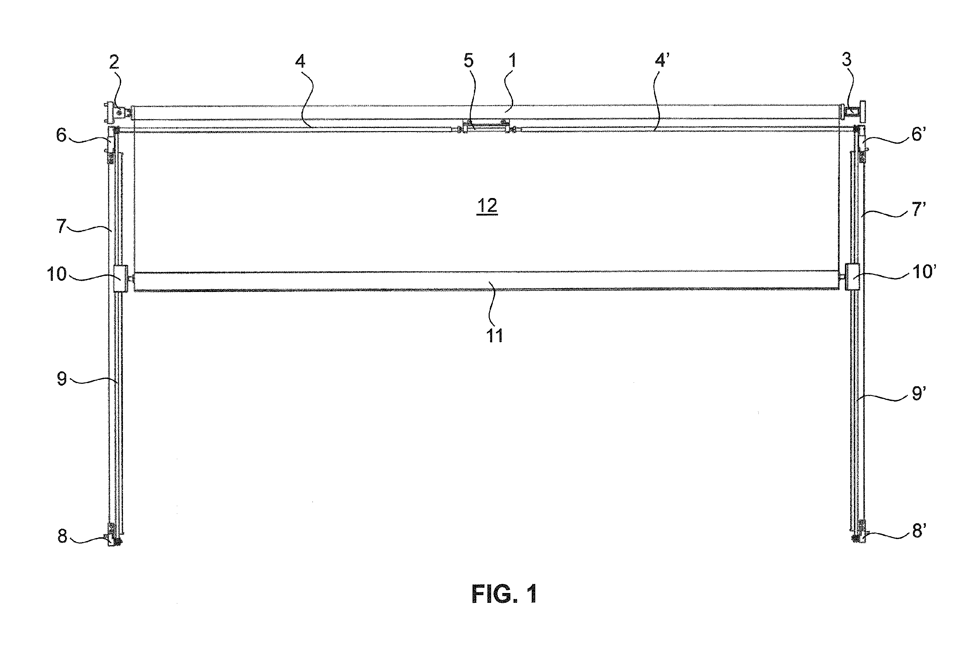

Die Figur 1 zeigt ein erfindungsgemässes manuell bedienbares Rollosystem, insbesondere zum Einbau in die Seitenwand eines Transportmittels, wie beispielsweise in einen Zug, einer Strassenbahn oder in einen Bus.

Das System weist ein Rollo 12 auf, das mit einem ersten Ende an einer Wickelrolle 1 befestigt und federbelastet auf diese aufwickelbar ist. Ein zweites Ende des Rollos 12 ist entsprechend frei ausgebildet. Das Rollo 12 ist vorzugsweise aus einem textilen Gewebe oder einem geeigneten anderen flexiblen Material gebildet. Vorzugsweise ist es flächig ausgebildet. Die Wickelrolle 1 für Rollos 12 ist aus dem Stand der Technik hinlänglich bekannt. Sie weist üblicherweise eine Rückstellfeder, üblicherweise eine Torsionsfeder, auf. Diese Feder wickelt das Rollo 12 entweder selbsttätig auf oder erzeugt zumindest eine Vorspannung, so dass das Rollo 12 auf der Rolle satt anliegend aufgewickelt wird. Üblicherweise lässt sich das Rollo 12 ohne weitere Fixierungsmittel in Zwischenpositionen halten, so dass das Fenster auch nur teilbeschattet werden kann.

Die Wickelrolle 1 ist an einem ihrer Enden an einer ortsfesten ersten Rollenlagerung 2 und an ihrem anderen Ende an einer ortsfesten zweiten Rollenlagerung 3 drehbar gelagert. Die Rollenlagerungen 2, 3 dienen zur Befestigung des Systems in einer Wand, vorzugsweise einer Seitenwand, des Fahrzeugs.

Am freien zweiten Ende des Rollos 12 ist eine Querleiste 11 angeordnet. Die Querleiste 11 kann ein separates Teil, beispielsweise aus Metall oder Kunststoff, sein. Es kann jedoch auch einstückig mit dem Rollo 12 ausgebildet sein, z.B. durch Verstärkung des freien Endes des Rollos 12.

Die Querleiste 11 weist seitlich über das Rollo 12 vorstehende Enden auf, an denen Gleiter 10, 10' vorgesehen sind. Diese Gleiter 10, 10' sind auf seitlichen Führungsschienen 7, 7' geführt. Die Führungsschienen 7, 7' befinden sich vorzugsweise seitlich der Längskanten des Rollos.

Die Führungsschienen 7, 7' erstrecken sich in Längsrichtung des Systems. In der dargestellten Ausführungsform sind die seitlichen Führungsschienen 7,7' gerade ausgeführt, sie können aber auch gekrümmt bezüglich ihrer Längsrichtung ausgeführt sein, so dass das Rollosystem auch für konkav bzw. konvex gekrümmte Fenster verwendet werden kann. Die Führungsschienen 7, 7' verlaufen im eingebauten Zustand üblicherweise in je einer Nut der Seitenwand.

An den Führungsschienen 7, 7' sind in der Auszugsrichtung des Rollos 1 oben jeweils eine erste Riemenlagereinheit 6, 6' mit ersten Zahnriemenrädern und unten jeweils eine zweite Riemenlagereinheit 8, 8' zweiten Zahnriemenrädern vorgesehen.

Eine Verbindungswelle 4, 4', 5 verbindet die erste linke Riemenlagereinheit 6 mit der ersten rechten Riemenlagereinheit 6', genauer die zwei ersten Zahnriemenräder miteinander. Die Verbindungswelle 4, 4', 5 und die Riemenlagereinheiten 6, 6' sind in Auszugsrichtung unterhalb der Wickelrolle 1 angeordnet, bzw. die Wickelrolle 1 ist oberhalb der Verbindungswelle 4, 4', 5 angeordnet.

Die Verbindungswelle 4, 4', 5 kann als durchgehende Welle ausgebildet sein. In dieser Ausführungsform weist sie eine zentral angeordnete Wellenverbindung 5 und eine links davon angeordnete linke Welle 4 und eine rechts davon angeordnete rechte Welle 4' auf. Sie wird weiter unten im Text noch detaillierter beschrieben.

Auf der linken Seite des Rollos 12 umläuft ein durch die erste und zweite linke Riemenlagereinheit 6 und 8 gehaltener linker Zahnriemen 9 die linke Führungsschiene 7. Er ist vorzugsweise vorgespannt. An der rechten Seite ist entsprechend ein rechter Zahnriemen 9' vorhanden.

Wie in Figur 1 erkennbar ist, lässt sich das Rollo 12 mittels der Querleiste 11 und dank der Gleiter 10, 10' entlang der Führungsschienen 7, 7' von Hand nach oben und unten verschieben, wodurch es von der Wickelrolle 1 auf- bzw. abgewickelt wird. Da die Gleiter 10, 10' an den Zahnriemen 9, 9' befestigt sind, bewegen sich diese um ihre entsprechenden Zahnriemenräder. Da die oberen, ersten Zahnriemenräder über die Verbindungswelle miteinander verbunden sind, bewegen sie sich synchron. In Folge davon können sich auch die Zahnriemen nur synchron zueinander bewegen und halten somit ihre zwei Gleiter stets auf derselben Höhe zueinander. Ein Verkanten des Rollos wird verhindert.

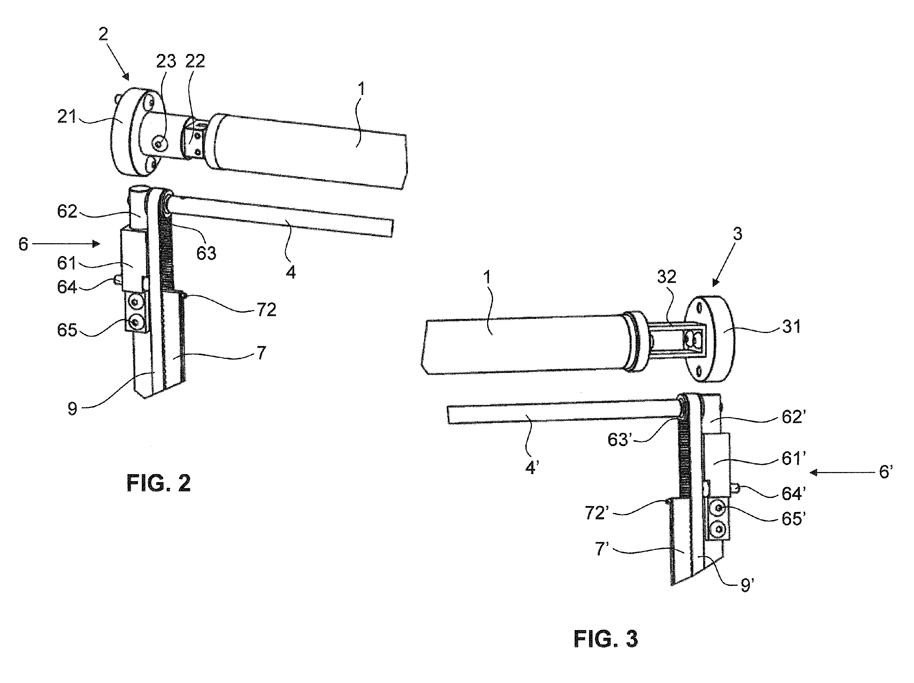

Die Figur 2 zeigt eine perspektivische Ansicht der ersten Rollenlagerung 2 und der ersten linken Riemenlagereinheit 6. Die erste Rollenlagerung 2 weist einen ersten Befestigungsflansch 21 zur seitlichen Befestigung an einer Wand, insbesondere einer Transportmittelwand, auf. Eine alternative frontale Befestigung ist ebenfalls möglich. Ein von vorne und/oder in Längsrichtung zugängliches Vorspannelement 22 ist zwischen dem ersten Befestigungsflansch 21 und der Wickelrolle 1 angeordnet. Eine von vorne zugängliche Feststellschraube 23 ist am ersten Befestigungsflansch 21 angeordnet. Soll die Vorspannung der in der Wickelrolle 1 angeordneten, nicht dargestellten Torsionsfeder verändert werden, so muss die Feststellschraube 23 gelöst werden und die Federvorspannung kann durch die Drehung des Vorspannelements 22 mit einem Gabelschlüssel eingestellt werden. Durch die Anordnung des Vorspannelements 22 und der Feststellschraube 23 ist die frontale Einstellung der Federvorspannung im eingebauten Zustand des Rollosystems möglich.

Die erste linke Riemenlagereinheit 6 weist einen ersten linken Riemenlagerkörper 61, ein darin verschiebbar gelagertes linkes Spannelement 62 und ein am linken Spannelement 62 drehbar gelagertes erstes linkes Zahnriemenrad 63 auf. Eine im ersten linken Riemenlagerkörper 61 und linken Spannelement 62 angeordnete, nicht dargestellte Druckfeder erzeugt die für die Vorspannung des linken Zahnriemens 9 benötigte Vorspannkraft. Die erste linke Riemenlagereinheit 6 wird mit ersten linken Befestigungsschrauben 64 seitlich an der Wand befestigt und mit zweiten linken Befestigungsschrauben 65 am oberen Ende der linken Führungsschiene 7 befestigt. Eine alternative frontale Befestigung der ersten linken Riemenlagereinheit 6 ist ebenfalls möglich.

Die linke Welle 4 ist mit dem ersten linken Zahnriemenrad 63 verbunden, so dass sich diese beiden Elemente miteinander drehen.

Am oberen Ende der linken Führungsschiene 7 ist ein nach innen, gegen das Rollo 12 hin gerichteter erster linker Anschlag 72 angebracht, welcher über die linke Führungsschiene 7 vorsteht. Dieser Anschlag kann jedoch auch so angeordnet sein, dass er frontal über die linke Führungsschiene 7 vorsteht. Der erste linke Anschlag 72 soll verhindern, dass der linke Gleiter 10 oben über die linke Führungsschiene 7 hinausfahren kann.

Vorzugsweise sind die Wickelrolle 1, die Bestandteile der ersten Rollenlagerung 2, der ersten linken Riemenlagereinheit 6, der linken Welle 4 und der linken Führungsschiene 7 aus Aluminium gefertigt. Andere Materialien, insbesondere metallische, sind jedoch auch möglich; z.B. Stahl, Chrom-Nickel-Stahl, Kunststoff oder Holz. Vorzugsweise weist der Zahnriemen 9 in Kunststoff eingebettete Zugstränge auf, wobei der Kunststoff Gummi oder Polyurethan ist und die Zugstränge aus Glasfaser, Aramid oder Stahl sind.

Die Figur 3 zeigt eine perspektivische Ansicht der zweiten Rollenlagerung 3 und der ersten rechten Riemenlagereinheit 6'. Die zweite Rollenlagerung 3 weist einen zweiten Befestigungsflansch 31 zur seitlichen Befestigung an der Wand auf. Eine alternative frontale Befestigung ist ebenfalls möglich. Ein Distanzelement 32 kann zwischen dem zweiten Befestigungsflansch 31 und der Wickelrolle 1 angeordnet sein.

Die erste rechte Riemenlagereinheit 6' und die rechte Führungsschiene 7' mit dem dazugehörigen ersten rechten Anschlag 72' weisen einen zur linken Seite symmetrischen Aufbau auf.

Die rechte Welle 4' ist mit dem ersten rechten Zahnriemenrad 63' verbunden, so dass sich diese beiden Elemente miteinander drehen.

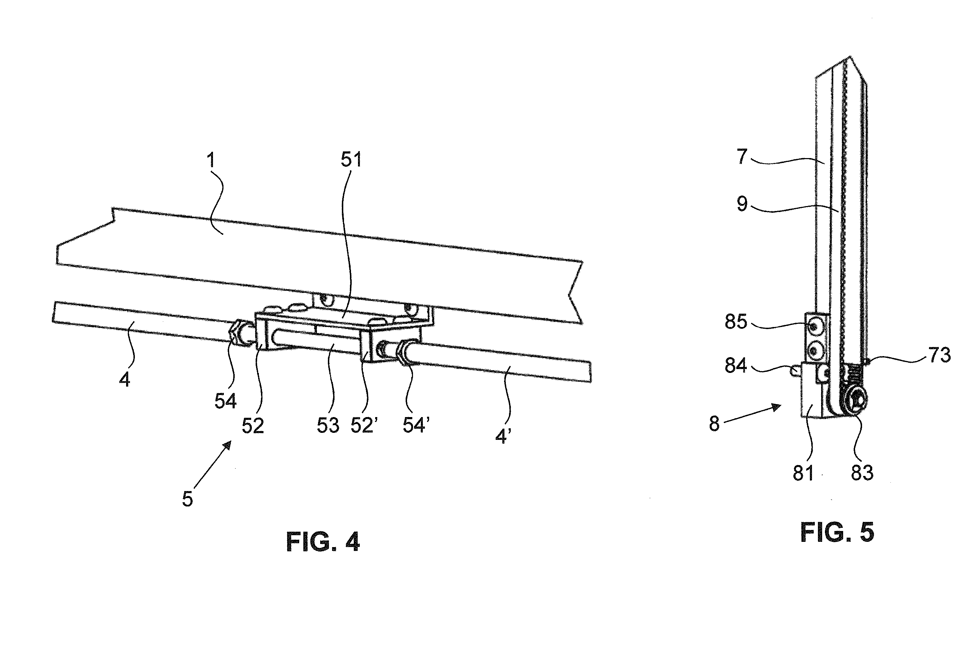

Die Figur 4 zeigt eine perspektivische Ansicht des mittleren Bereichs der Verbindungswelle 4, 4', 5. Die Wellenverbindung 5 ist mittig zwischen den beiden zueinander symmetrischen Wellen 4, 4' angeordnet.

Sie erfüllt im Wesentlichen zwei Funktionen. Zum einen ermöglicht sie eine spielfrei einstellbare Verbindung zwischen der ersten linken Riemenlagereinheit 6 mit der ersten rechten Riemenlagereinheit 6' und zum anderen verhindert die mittige Anordnung ein Durchhängen der Verbindungswelle 4, 4', 5 im Ruhezustand und ein Schwingen der Verbindungswelle 4, 4', 5 im bewegten Zustand, d.h. wenn sich die Verbindungswelle 4, 4', 5 dreht.

Die Wellenverbindung 5 weist einen Befestigungswinkel 51 zur Befestigung an einer Wand, insbesondere einer Transportmittelwand, auf sowie, einen linken und rechten am Befestigungswinkel 51 angebrachten Lagerblock 52, 52' zur beidseitigen Lagerung einer Verbindungsstange 53.

Die Verbindungsstange 53 weist zumindest in ihren äusseren Bereichen Aussengewinde auf, welche in entsprechenden Innengewinde der Wellen 4, 4' einschraubbar sind. Zur Fixierung der Verbindung zwischen der Verbindungsstange 53 und den Wellen 4, 4' sind Kontermuttern 53, 53' vorgesehen.

Vorzugsweise sind die Bestandteile der Verbindungswelle 4, 4', 5 aus Aluminium gefertigt. Andere Materialien, insbesondere metallische, sind jedoch auch möglich.

Die Figur 5 zeigt eine perspektivische Ansicht der zweiten linken Riemenlagereinheit 8. Die zweite linke Riemenlagereinheit 8 weist einen zweiten linken Riemenlagerkörper 81 und ein am zweiten linken Riemenlagerkörper 81 drehbar gelagertes zweites linkes Zahnriemenrad 83 auf. Die zweite linke Riemenlagereinheit 8 wird mit dritten linken Befestigungsschrauben 84 seitlich an der Wand befestigt und mit vierten linken Befestigungsschrauben 85 am unteren Ende der linken Führungsschiene 7 befestigt. Eine alternative frontale Befestigung der zweiten linken Riemenlagereinheit 8 ist ebenfalls möglich.

Am unteren Ende der linken Führungsschiene 7 ist ein nach innen, gegen das Rollo 12 hin gerichteter zweiter linker Anschlag 73 angebracht, welcher über die linke Führungsschiene 7 vorsteht. Dieser Anschlag kann jedoch auch so angeordnet sein, dass er frontal über die linke Führungsschiene 7 vorsteht. Der zweite linke Anschlag 73 soll verhindern, dass der linke Gleiter 10 unten über die linke Führungsschiene 7 hinausfahren kann.

Vorzugsweise sind die Bestandteile der zweiten linken Riemenlagereinheit 8 aus Aluminium gefertigt. Andere metallische Materialien sind jedoch auch möglich.

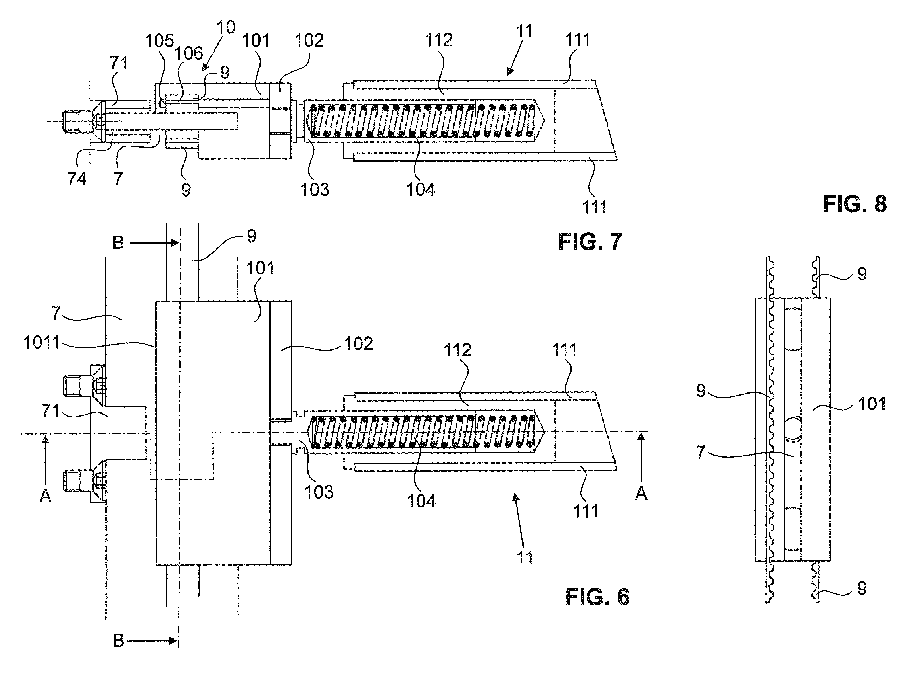

Die Figur 6 zeigt eine Frontansicht des linken Gleiters 10. Er weist einen Gleitkörper 101, eine Verbindungsplatte 102, einen Druckfederhalter 103 mit der darin gehaltenen Druckfeder 104 auf.

Ebenfalls in Figur 6 ist eine Ausführungsform der Querleiste 11 gezeigt. Die Querleiste 11 weist eine Querstange 111 auf an welcher das freie Ende des Rollos 12 befestigt wird. Die Querstange 111 ist rohrförmig ausgebildet und weist an jedem ihrer seitlich über das Rollo 12 vorstehenden Enden einen in die Querstange 111 eingeschobenen Federeinsatz 112 auf. Der Druckfederhalter 103 und die Druckfeder 104 sind teilweise in den Federeinsatz 112 eingeschoben und werden durch diesen geführt.

In der dargestellten Ausführungsform ist die Querstange 111 ein Aluminium-Hohlprofil. Andere Materialien, insbesondere metallische oder faserverstärkte, sind jedoch auch möglich. Alternativ kann die Verstärkung des freien Endes des Rollos 12 durch ein band-oder stabförmiges Vollprofil oder durch die Mehrfachfaltung des Rollos 12 selber erreicht werden.

Die Verbindungsplatte 102 ist seitlich ausserhalb des Druckfederhalters 103 mittig in Auszugsrichtung angeordnet und an diesem befestigt. In der dargestellten Ausführungsform ist der Druckfederhalter 103 in die Verbindungsplatte 102 eingeschraubt. Anstelle der Schraubverbindung sind Kleb- oder Schweissverbindungen möglich. Ein Gleitkörper 101 ist seitlich ausserhalb der Verbindungsplatte 102 und somit gegenüber dem Federeinsatz 112 angeordnet und an dieser befestigt. In der dargestellten Ausführungsform ist der Gleitkörper 101 mit der Verbindungsplatte 102 verschraubt. Anstelle der Schraubverbindung sind Kleb- oder Klemmverbindungen möglich. Da die Gleiter 10, 10' auf beiden Seiten der Querleiste 11 durch Druckfedern 104 gleichmässig nach aussen gegen die Führungsschienen 7, 7' gedrückt werden, wird die Querleiste 11 zwischen den Führungsschienen 7, 7' zentriert.

Die Verbindungsplatte 102 und der Druckfederhalter 103 sind aus Aluminium gefertigt. Andere metallische Materialien sind jedoch auch möglich. Der Gleitkörper 101 ist vorzugsweise aus POM gefertigt. Andere Kunststoffe, kunststoffbeschichtete Körper oder andere Gleitkörper mit guten Gleit- und Führungseigenschaften sind jedoch auch möglich.

Die Führungsschiene 7 ist mit Schienenhalter 71 seitlich mit Befestigungsschrauben an der Wand befestigt. Eine alternative frontale Befestigung ist ebenfalls möglich.

Die Schienenhalter 71 sind aus Aluminium gefertigt. Andere Materialien, insbesondere andere metallische Materialien, sind jedoch auch möglich.

Alternativ kann auf die Schienenhalter 71 verzichtet werden, wenn die Wand, Aussparungen aufweist, in welche die Führungsschiene 7, 7' eingelassen und fixiert werden können. Die Fixierung kann durch Klemmen oder Kleben realisiert werden.

In einer anderen, hier nicht dargestellten Ausführungsform sind die Führungsschienen 7, 7' in der Wand angeformt bzw. fest mit ihr vergossen. Insbesondere bei Kunststoffwänden lässt sich dies auf einfache Art und Weise verwirklichen. Derartige Kunststoffwände werden beispielsweise als Innenverkleidungen von Transportmitteln wie Züge, Trams oder Busse verwendet.

Figur 7 zeigt eine Schnittansicht entlang der Linie AA der Figur 6. Die Verbindungsplatte 102 ist mittig quer zur Auszugsebene am Druckfederhalter 103 angeordnet und der Gleitkörper 101 ist mittig bezüglich der Verbindungsplatte 102 angeordnet. Die Führungsschiene 7 ist vom Gleitkörper 101 auf drei Seiten umschlossen. D.h. der Gleitkörper 101 stützt sich in Richtung der Längsrichtung der Querleiste 11 auf der gegen das Rollo 12 gerichteten Stirnseite der Führungsschiene 7 ab und ist von den zwei die Stirnseite angrenzenden Flächen der Führungsschiene 7 geführt.

Auf der von der Verbindungsplatte 102 abgewandten Seite des Gleitkörpers 101 ist eine Nut zur Aufnahme des Zahnriemens 9 vorgesehen. Die Nut ist von der äusseren Seitenfläche 1011 des Gleitkörpers 101 beabstandet angeordnet, so dass eine genügende Wandstärke im Gleitkörper 101 für Bohrungen 105 in der Seitenfläche 1011 zur Aufnahme von Stiften 106 verbleibt. Die Stifte 106 sind so bemessen, dass sie in die Zahnlücken des Zahnriemens 9 passen. Der Zahnriemen 9 liegt auf seiner ungezahnten Seite an der Nutgrundfläche des Gleitkörpers 101 an und wird auf der gezahnten Seite durch die zwischen den Zähnen angeordneten Stifte 106 fixiert. Die Stifte 106 sind von der Seitenfläche 1011 her einschiebbar.

Die Führungsschiene 7 ist klemmend im Schienenhalter 71 gehalten, wobei die Klemmung durch eine bandförmige elastische Einlage 74 realisiert ist, welche zwischen der Führungsschiene 7 und dem Schienenhalter 71 in diesen eingelegt ist.

Figur 8 zeigt eine Schnittansicht entlang der Linie BB der Figur 6. In diesem Ausführungsbeispiel ist der Zahnriemen 9 offen und wird im Gleitkörper 101 zusammengeführt und mit Stiften 106 an diesem fixiert. Alternativ kann auch ein geschlossener Zahnriemen verwendet werden. Der Zahnriemen 9 umläuft die Führungsschiene 7.

Das erfindungsgemässe Rollosystem ermöglicht ein verkantungsfreies manuelles Verschieben des Rollos bei sehr geringem Platzbedarf, insbesondere bei einer freizuhaltenden Fensterunterseite.

### BEZUGSZEICHENLISTE

- 1: Wickelrolle
- 2: Erste Rollenlagerung
- 21: Erster Befestigungsflansch
- 22: Vorspannelement
- 23: Feststellschraube
- 3: Zweite Rollenlagerung
- 31: Zweiter Befestigungsflansch
- 32: Distanzelement
- 4: Linke Welle
- 4': Rechte Welle
- 5: Wellenverbindung
- 51: Befestigungswinkel
- 52: Linker Lagerblock
- 52': Rechter Lagerblock
- 53: Verbindungsstange
- 54: Linke Mutter
- 54': Rechte Mutter
- 6: Erste linke Riemenlagereinheit
- 6': Erste rechte Riemenlagereinheit
- 61: Erster linker Riemenlagerkörper
- 61: Erster rechter Riemenlagerkörper
- 62: Linkes Spannelement
- 62': Rechtes Spannelement
- 63: Erstes linkes Zahnriemenrad
- 63': Erstes rechtes Zahnriemenrad
- 64: Erste linke Befestigungsschraube

- 64': Erste rechte Befestigungsschraube
- 65: Zweite linke Befestigungsschraube
- 65': Zweite rechte Befestigungsschraube
- 7: Linke Führungsschiene
- 7': Rechte Führungsschiene
- 71: Schienenhalter
- 72: Erster linker Anschlag
- 72': Erster rechter Anschlag
- 73: Zweiter linker Anschlag
- 8: Zweite linke Riemenlagereinheit
- 8': Zweite rechte Riemenlagereinheit
- 81: Zweiter linker Riemenlagerkörper
- 83: Zweites linkes Zahnriemenrad
- 84: Dritte linke Befestigungsschraube
- 85: Vierte linke Befestigungsschraube
- 9: Linker Zahnriemen
- 9': Rechter Zahnriemen
- 10: Linke Gleiter
- 10': Rechte Gleiter
- 101: Gleitkörper
- 1011: Äussere Seitenfläche
- 102: Verbindungsplatte
- 103: Druckfederhalter
- 104: Druckfeder
- 105: Bohrung
- 106: Stift
- 11: Querleiste

- 111: Querstange
- 112: Federeinsatz
- 12: Rollo

## Patentansprüche

1. Rollosystem mit einem Rollo (12) und einer Wickelrolle (1),
wobei das Rollo (12) ein freies Ende mit einer Querleiste (11) zum manuellen Verschieben des Rollos (12) aufweist,
wobei an gegenüberliegenden Seiten der Querleiste (11) je ein Gleiter (10,10') vorhanden ist, mittels welchen die Querleiste (11) geführt verschiebbar ist, wobei durch manuelle Verschiebung der Querleiste (11) das Rollo (12) auf der Wickelrolle (1) aufwickelbar und abwickelbar ist,
**dadurch gekennzeichnet,**
**dass** zwei Führungsschienen (7, 7') vorhanden sind, wobei je ein Gleiter (10, 10') auf einer der Führungsschienen (7, 7') verschiebbar angeordnet ist,
**dass** ein erster und ein zweiter Riemen (9, 9') vorhanden ist, wobei jeder der Riemen (9, 9') je ein erstes und ein zweites Riemenrad (63, 83, 63', 83') umläuft, wobei das erste Riemenrad (63) des ersten Riemens (9) mit dem ersten Riemenrad (63') des zweiten Riemens (9') über eine Verbindungswelle (4, 4', 5) verbunden ist, um die Bewegungen der zwei Riemen (9, 9') miteinander zu synchronisieren, und
**dass** je ein Gleiter (10, 10') mit je einem der Riemen (9, 9') verbunden ist.

2. Rollosystem nach Anspruch 1, wobei die zwei Riemen Zahnriemen (9, 9') und die Riemenräder Zahnriemenräder (63, 83, 63', 83') sind.

3. Rollosystem nach einem der Ansprüche 1 oder 2, wobei je ein Riemen (9, 9') je eine Führungsschiene (7, 7') umläuft.

4. Rollosystem nach einem der Ansprüche 1 bis 3, wobei die Wickelrolle (1) oberhalb der Verbindungswelle (4, 4', 5) angeordnet ist.

5. Rollosystem nach einem der Ansprüche 1 bis 4, wobei die Führungsschienen (7, 7') bandförmig ausgebildet sind.

6. Rollosystem nach einem der Ansprüche 1 bis 5, wobei die Enden jeweils eines Riemens (9, 9') bei jeweils einem Gleiter (10, 10') zusammengeführt und befestigt sind.

7. Rollosystem nach den Ansprüchen 2 und 6, wobei der Zahnriemen (9, 9') auf seiner ungezahnten Seite an einem entsprechenden Gleitkörper (101) des Gleiters (10, 10') anliegt und durch Stifte (106) fixiert ist, welche auf der gezahnten Seite des Zahnriemens (9, 9') zwischen den Zähnen angeordnet sind, wobei die Stifte (106) in Bohrungen des entsprechenden Gleitkörpers (101) einschiebbar sind.

8. Rollosystem nach einem der Ansprüche 1 bis 7, wobei erste Riemenlagerkörper (61, 61') vorhanden sind, welche am oberen Ende der Führungsschienen (7, 7') angeordnet sind, wobei in Längsrichtung verschiebbare Spannelemente (62, 62') am ersten Lagerkörper (61, 61') angeordnet sind, wobei Druckfedern die Spannkraft der Spannelemente (62, 62') erzeugen und wobei je ein Riemenrad (63, 63') der zwei Riemen (9, 9') drehbar gelagert an den Spannelementen (62, 62') angeordnet sind.

9. Rollosystem nach Anspruch 8, wobei die zwei Riemenräder (63, 63') die ersten Riemenräder sind.

10. Rollosystem nach einem der Ansprüche 1 bis 9, wobei zweite Riemenlagerkörper (81) vorhanden sind, welche am unteren Ende der Führungsschienen (7, 7') angeordnet sind, und wobei die zweiten Räder (83) drehbar gelagert an den Riemenlagerkörper (81) angeordnet sind.

11. Rollosystem nach einem der Ansprüche 1 bis 10, wobei die Gleiter (10, 10') die Führungsschienen (7, 7') teilweise umschliessen.

12. Rollosystem nach einem der Ansprüche 1 bis 11, wobei ein Vorspannelement (22) zur Einstellung einer Rückstellkraft der Wickelrolle (1) und eine frontal zugängliche Feststellschraube (23) zur frontalen Einstellung des Vorspannelements (22) vorhanden sind.

13. Rollosystem nach einem der Ansprüche 1 bis 12, wobei Drehachsen der ersten Riemenräder (63, 63') kollinear mit einer Drehachse der Verbindungswelle (4, 4', 5) sind.

14. Rollosystem nach einem der Ansprüche 1 bis 13, wobei die Gleiter (10, 10') federbelastet gegen die Führungsschienen (7, 7') gedrückt sind, wodurch die Querleiste (11) zwischen den Führungsschienen (7, 7') zentriert ist.

15. Rolloeinheit zur Verwendung in einem Rollosystem gemäss einem der Ansprüche 1 bis 14, wobei die Rolloeinheit eine Querleiste (11) zum manuellen Verschieben eines Rollos (12) aufweist,
wobei an gegenüberliegenden Seiten der Querleiste (11) je ein Gleiter (10, 10') vorhanden ist, mittels welchen die Querleiste (11) geführt verschiebbar ist, wobei durch manuelle Verschiebung der Querleiste (11) das Rollo (12) aufwickelbar und abwickelbar ist,
**dadurch gekennzeichnet,**
**dass** die Gleiter (10, 10') so ausgebildet sind, dass sie auf einer Führungsschiene (7, 7') verschiebbar ist,
**dass** ein erster und ein zweiter Riemen (9, 9') vorhanden ist, wobei jeder der Riemen (9, 9') je ein erstes und ein zweites Riemenrad (63, 83, 63', 83') umläuft, wobei das erste Riemenrad (63) des ersten Riemens (9) mit dem ersten Riemenrad (63') des zweiten Riemens (9') über eine Verbindungswelle (4,4', 5) verbunden ist, um die Bewegungen der zwei Riemen (9, 9') miteinander zu synchronisieren, und
**dass** je ein Gleiter (10, 10') mit je einem der Riemen (9, 9') verbunden ist.
